**Europäisches Patentamt**

**European Patent Office**

**Office européen des brevets**

(19)

(11) **EP 1 313 279 A1**

(12) **EUROPEAN PATENT APPLICATION**

(43) Date of publication:
**21.05.2003 Bulletin 2003/21**

(51) Int Cl.⁷: $H04L\ 27/227$, $H04L\ 25/06$

(21) Application number: **01440383.6**

(22) Date of filing: **14.11.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | • **Cueff, Valérie**<br>**75015 Paris (FR)**<br>• **Eudes, Jacques**<br>**92600 Asnières (FR)** |
| (71) Applicant: **ALCATEL**<br>**75008 Paris (FR)** | (74) Representative: **Urlichs, Stefan, Dipl.-Phys. et al**<br>**Alcatel**<br>**Intellectual Property Department,**<br>**Stuttgart**<br>**70430 Stuttgart (DE)** |
| (72) Inventors:<br>• **Lahrech, Ahmed**<br>**91230, Montgeron (FR)** | |

(54) **Method for compensating phase impairments in a signal and corresponding receiver**

(57)     The present invention relates to a method for compensating phase impairments in a digital signal comprising symbols (r(k)) received at a receiver, the signal being modulated with a modulation having at least a phase modulation component, the phase impairments being compensated using a feedback loop comprising the steps of :

-     performing a hard decision (31) on a current received symbol after a first phase correction;
-     evaluating a reliability indicator (32) for the current

received symbol after hard decision (dk);

-     evaluating a phase correction term (33) as a predefined function of a phase difference between the current symbol after hard decision (dk) and the current symbol as received at said receiver (r(k)), said predefined function further depending on the reliability indicator;
-     applying to a subsequent symbol received at the receiver a phase shift (34) equal to said phase correction term.

**Fig 2**

Printed by Jouve, 75001 PARIS (FR)

## Description

## Background of the Invention

The present invention relates to a method for compensating phase impairments in a signal, more particularly when the signal is modulated with a modulation comprising at least a phase modulation component.

A signal modulated with a modulation comprising a phase modulation component, can be represented by following formula:

$$s(t) = a(t)\cos(\bar{\omega} \cdot t + \varphi(t))$$

The demodulation of a such signal is performed by multiplying the received signal at the receiver with a cosine signal generated at a local oscillator having the same period $\bar{\omega}$. This operation enables to recover the phase $\varphi(t)$ of the received signal. Having knowledge of the signal phase and of the used modulation, the receiver is able to demodulate the signal. A simple hard decision module can be used to associate a modulation symbol part of the used modulation constellation to a current received symbol.

However, due to slight frequency drift at local oscillators in the transmitter and in the receiver and due to the presence of additive gaussian noise, a residual phase error in the received signal generates errors at the demodulator. The demodulator is then susceptible to associate a wrong modulation symbol to the current received symbol.

In prior art, some methods where proposed to cope with this problem and minimise the demodulation errors due to frequency drift and additive gaussian noise. Usually, they consist in compensating a phase error by applying a phase shift to the signal before demodulation.

A first prior art method, the phase error is evaluated in a phase loop with elevation of the phase to the power M. M corresponds to the modulation constellation size. This method is especially used for MPSK (Mary Phase-Shift Keying) modulations. However, this method cannot be applied to 16QAM (Quadrature Amplitude Modulation) or 64QAM because they are combined phase and amplitude modulations.

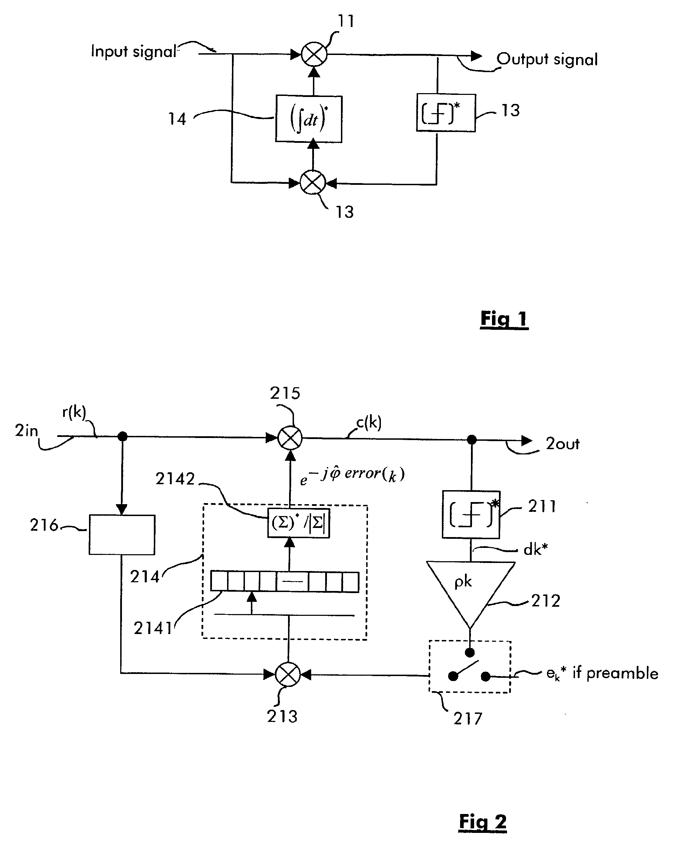

Another method consists in evaluating the phase error in a loop with feedback decision as described in figure 1. An input signal is multiplied with a phase error estimation at a multiplier 11. This signal is connected to a signal output and simultaneously submitted to a hard decision module 12. Hard decision module 12 determines, according to a well-known method, the modulation symbol belonging to the used modulation constellation which corresponds the best to the current symbol after phase correction Preferably, the complex conjugate number of the selected modulation symbol is calculated at hard decision module 12. The loop for determining the phase error estimation consists in multiplying at a multiplier 13 the signal at the output of hard decision module 12 with the input signal.

In a simple embodiment, the result of this multiplication represents the phase error and the corresponding phase shift is used for correcting the next received symbol at multiplier 11.

In a preferred mode, phase errors computed on several previously received symbols are averaged at integrator 14 for obtaining a phase correction with reduced variance.

This solution presents, nevertheless, the disadvantage not to be optimized for coping with very noisy consecutive symbols and to generate in such a situation lots of consecutive wrong decisions at the hard decision module.

A particular object of the present invention is to provide a method for evaluating a phase error in a signal modulated with a modulation comprising at least a phase modulation component minimizing the number of wrong decisions especially in very noisy environment.

Another object of the invention is to provide a receiver for performing this method.

## Summary of the Invention

These objects, and others that appear below, are achieved by a method for compensating phase impairments in a signal according to claim 1 and a corresponding receiver according to claim 7.

According to the present invention, a phase correction term is evaluated as a predefined function of a phase difference between a current symbol after phase correction and hard decision and this symbol as received at the receiver input. Moreover, this phase difference is weighted by an indicator of the reliability of a hard decision result on the received symbol. The phase difference weighted by its reliability constitutes the error correction term and a corresponding phase shift is applied to the next symbols.

The method according to the present invention presents the advantage to give less weight to low reliable symbols while increasing the weight of more reliable symbols. The influence of very noisy symbols in the phase correction loop is reduced. This method gives also a higher resistance to disconnecting in a circuit-oriented transmission mode or high cell loss rate in a packet-oriented transmission mode.

The method according to the present invention presents further the advantage not to require a high processing power.

In a preferred embodiment of the present invention, a predefined number of symbols and their corresponding phase correcting terms are combined to compute a phase error less subject to sudden radio propagation modifications.

Further advantageous features of the invention are defined in the other dependent claims.

## Brief Description of the Drawings

Other characteristics and advantages of the invention will appear on reading the following description of a preferred embodiment given by way of non-limiting illustrations, and from the accompanying drawings, in which:

-   Figure 1 shows a prior art demodulator using a loop with decision feedback;
-   Figure 2 represents a receiver performing phase impairment compensation according to the present invention;
-   Figure 3 shows an implementation of the method according to the present invention;
-   Figure 4 is a diagram showing the performance of the method according to the present invention compared to prior art methods.

## Detailed Description of the Invention

Figure 1 has already been described in connection with prior art.

The present invention will be described in the framework of a radio communication network. However, the present invention can be used in any other type of communication networks transporting modulated voice or data as a cable network or an optical fiber network. The application of the present invention to a radio communication network as described below should be viewed as not restrictive.

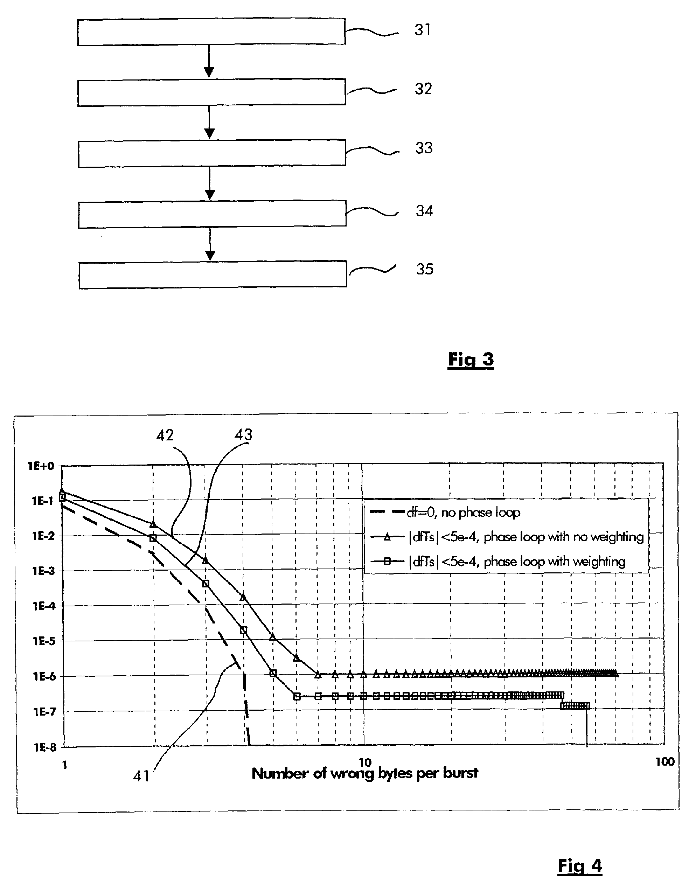

Figure 2 represents a receiver according to the present invention. The receiver comprises a signal input 2in, a signal output 2out, a module 21 for compensating phase impairments. The signal output 2out is preferably connected to further not represented receiver modules as an equalizer and / or a decoder. The present invention concerns only phase compensation module 21 and does not depend on further modules present at the receiver.

Module 21 for compensating phase impairments comprises a hard decision module 211, a weighting module 212, a multiplier 213, an integration module 214, and a multiplier 215.

Signal input 2in is connected to multiplier 215 which is connected to signal output 2out. A feedback loop consisting in hard decision module 211 connected to weighting module 212, itself connected to multiplier 213 and a integration module 214 is finally connected to multiplier 215.

A digital signal r(k) enters receiver over signal input 2in, a phase shift $e^{-j\hat{\varphi}_{error}(k)}$ is applied to digital signal r(k) at multiplier 215 ($\hat{\varphi}_{error}(k)$ is the estimated phase error at the instant kTs, where $T_s$ is symbol duration). The output of multiplier 215 is simultaneously submitted to the feedback loop and leaves module 21 at signal output 2out.

The signal $c(k) = r(k) \cdot e^{-j\hat{\varphi}_{error}(k)}$ forwarded to the

feedback loop will be processed so as to generate the appropriate phase shift to be applied to a next input signal r(k+i) at multiplier 215.

Hard decision module 211 selects a modulation symbol dk out of the used modulation constellation which corresponds the best to the current received symbol c(k). For this purpose, the received symbol c(k) is compared to the modulation symbols dk of the modulation constellation. The modulation symbol having the lowest distance to the received symbol c(k) is selected. The distance is preferably an Euclidean distance between the points representing the different modulation symbols dk on a Cartesian coordinate system and the point corresponding to the current received symbol c(k). Preferably, the complex conjugate number of dk, dk*, is calculated at hard decision module 211.

Weighting module 212 determines a reliability indicator of the symbol dk after hard decision. The reliability indicator is determined according to a predefined function. It shall for example depend on the inverse of the Euclidean distance between the received symbol c(k) and the symbol after hard decision dk on the Cartesian co-ordinate system representing the modulation constellation. Preferably, the lowest reliability is obtained when a symbol before demodulation is at the same distance of two hard symbols of the modulation constellation. The reliability is preferably a value between 0 and 1. A possible function for the reliability indicator $\rho_k$ may be:

$$\rho_k(c_k, d_k) = \frac{1}{\left\| c_{(k)} - d_k \right\|}$$

The result of hard decision module 211, dk*, is multiplied by the reliability $\rho_k$ at weighting module 212 and multiplied by the input symbol r(k) at multiplier 213.

The corresponding input symbol r(k) is preferably delayed at a delay module 216 by the processing time necessary to obtain the output of weighting module 212. This processing time consists in the time duration for performing multiplication at multiplier 215, hard decision at hard decision module 211 and weighting at weighting module 212.

In the following, the output of multiplier 213 is called weighted phase difference.

In a simple embodiment of the present invention, the weighted phase difference (also called in the present embodiment error correcting term) is directly multiplied to the next symbol at multiplier 215.

In a preferred embodiment of the present invention, the error correcting term is obtained by integration, at integration module 214, of several phase error correction terms obtained for several previously received symbols (r(k-1), r(k-2), ..., r(k-N)). For each one of the N previously received symbols, the weighted phase difference is stored at shift register 2141 which contains the weighted phase differences of the N previous demodulated symbols. Summing module 2142 calculates the average value of all N weighted phase differences stored in shift register 2141 and generates the phase correction term $e^{-j\hat{\varphi}_{error}(k)}$ which is multiplied by the next input symbol received at multiplier 215.

In a preferred embodiment of the present invention, input symbols r(k) belonging to a preamble are submitted to a different processing. This processing is preferably used for initialising module 21 for compensating phase error impairments.

A preamble corresponds to a sequence of symbols known at the receiver with 100 % reliability at the receiver. Then, hard decision followed by weighting is not necessary in this case. On the contrary, the expected symbol of the preamble is directly multiplied at multiplier 213 with the corresponding input symbol rk. In this case, no delay should be applied at delay module 216.

Moreover, a switch 217 should be present between weighting module 212 and multiplier 213 to choose if the input of multiplier 213 should be the output of weighting module 212 or a known symbol of the preamble stored in a predefined memory location. The position of switch 217 should be preferably controlled by a preamble detection module which is made aware of the reception of a preamble.

Figure 3 shows a possible implementation of the method according to the present invention. The steps performed in the feedback loop will be described.

Step 31 consists in performing hard decision on current received symbol c(k) obtained from a symbol r(k) as received at the input of the receiver after a phase correction at multiplier 215. The applied phase correction depends on a phase error calculated on previous symbols. The hard decision consists in selecting a modulation symbol dk corresponding the best to received symbol c(k).

Step 32 consists in evaluating a reliability indicator of modulation symbol dk after hard decision.

Step 33 consists in evaluating a phase correction term $e^{-j\hat{\varphi}_{error}(k)}$ as a predefined function of modulation symbol dk, reliability indicator and received symbol r(k).

Step 34 consists in averaging phase correction terms obtained for N previously received symbols. For example, N=16 can be used in the framework of a 16QAM while N= 4 or 8 may be used for a QPSK modulation.

Step 35 consists in multiplying the average phase correction term $e^{-j\hat{\varphi}_{error}(k)}$ evaluated at step 34 with a next symbol r(k+1) received at the module for compensating phase impairments 21.

Figure 4 is a diagram showing performances of the method according to the present invention compared to prior art methods. For this purpose, the present invention has been tested in a bursted mode context of a LMDS system. The diagram represents the number of wrong bytes per packet on the x-axis and the cumulated probability of this event on the y-axis.

A first curve 41 represents performances of system without retroactive phase loop where local oscillator are ideal (i.e. free from frequency drift). The wrong bytes are only due to gaussian noise. This curve is used as reference for evaluating the performance of system in presence of frequency drift.

A second curve 42 represents performances of a phase impairment compensation system with a conventional retroactive phase loop as described in figure 1 in presence of frequency drift.

A third curve 43 represents performances of a phase impairment compensation system with a retroactive phase loop according to the present invention in presence of frequency drift.

For this purpose, packets having randomly distributed frequency and phase offsets, df, have been submitted to the phase compensation system. The number of wrong bytes per packet has been determined after phase error correction. This number of wrong bytes does not take into account any error correction made thanks to an error correcting code but only the wrong bytes due to a bad hard decision.

For curves 42 and 43, the randomly distributed frequency offsets have been chosen in an interval so that $|df{\cdot}Ts|{\leq}5e^{-4}$. Ts being the symbol duration.

This diagram shows an improvement of the system performance when using the method according to the present invention since curve 43 is closer to reference curve 41 than curve 42.

The invention can be used in bursted mode especially in the uplink transmission direction of a transmission network. In this case, the successive packets received at a base station are transmitted by different terminals and then submitted to different phase errors due for example to different oscillator drifts at the different terminals. It is necessary, in this case, that the base station performs a new initialization of the module 21 for compensating phase impairment after each received packets. The initialization is preferably realized during the reception of the packet preamble.

The invention may also be used with the same advantage in a continue (non-bursted) mode where successive packets are issued by the same transmitter. This would be the case in the downlink transmission direction where a base station broadcast a data or transmit a Time division Multiplex to different terminals. In this case, no re-initialization between packets is necessary.

## Claims

1. Method for compensating phase impairments in a digital signal comprising symbols (r(k)) received at a receiver, said signal being modulated with a modulation having at least a phase modulation component, said phase impairments being compensated using a feedback loop, said method comprising the steps of :

- performing a hard decision (31) on a current received symbol after a first phase error correction;
- evaluating a reliability indicator (32) for said current received symbol after hard decision (dk);
- evaluating a phase correction term (33) as a predefined function of a phase difference between said current symbol after hard decision (dk) and said current symbol as received at said receiver (r(k)), said predefined function further depending on said reliability indicator;
- applying to a subsequent symbol received at said receiver a phase shift (35) equal to said phase correction term.

2. Method according to claim 1, comprising the step (34) of applying to a subsequent symbol a phase shift obtained as a predefined function of phase correction terms obtained for at least two previously demodulated symbols

3. Method according to claim 1, wherein said phase correction term is obtained by multiplying said reliability indicator with the complex conjugate number of said current symbol after phase error correction and hard decision (dk) and with said current symbol as received at said receiver (r(k)).

4. Method according to claim 3, further comprising the step of delaying said currently received symbol (r(k)) by a processing time necessary to obtain said reliability indicator multiplied by said complex conjugate number of said current symbol after hard decision (dk).

5. Method according to claim 1, further comprising the step of detecting whether said current received symbol (r(k)) belongs to a preamble of a data packet known at said receiver.

6. Method according to claim 5, further comprising the step of multiplying the complex conjugate of said symbol of the preamble known at the receiver with said current symbol as received at said receiver (r(k)) if said current received symbol belongs to the preamble of a data packet.

7. Receiver dedicated to receive a digital signal comprising symbols (r(k)), said signal being modulated with a modulation having at least a phase modulation component, said receiver comprising a module (21) for compensating phase impairments in said received signal, said module comprising, arranged in a feedback loop:

- a hard decision module (211) for selecting a modulation symbol out of a set of predefined modulation symbols for a current received symbol;
- a weighting module (212) for evaluating a reliability indicator for said current received symbol after hard decision (dk);
- a first multiplier (213) for calculating a phase correcting term as a function of a phase difference between a symbol after hard decision and said symbol as received at said receiver and weighting said phase difference by said reliability indicator;
- a second multiplier (215) for applying a phase shift equal to said phase correcting term to a subsequent received symbol (r(k+1)).

8. Receiver according to claim 7, further comprising an integration module (214) for averaging phase correcting terms for at least two previously received symbol;

9. Receiver according to claim 7, further comprising a delay module (216) for delaying said current received symbol before submitting it to the input of said first multiplier (213), said delay being equal to the processing time necessary to obtain said reliability indicator multiplied by said complex conjugate number of said current symbol after phase error correction and hard decision (dk)

10. Receiver according to claim 7, further comprising a switch (217) for choosing between the output of said weighting module (212) and a predefined memory as input of said first multiplier (213), said switch (217) being controlled by a preamble detection module.

11. Receiver according to claim 7, adapted to be used in a radio communication network.

**Fig 1**

**Fig 2**

**Fig 3**

**Fig 4**

((o)) **European Patent Office** | **EUROPEAN SEARCH REPORT** | **Application Number**
EP 01 44 0383

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | FR 2 721 778 A (FRANCE TELECOM) 29 December 1995 (1995-12-29) * page 9, line 28 - line 31 * * page 10, line 13 - line 18 * * page 10, line 21 - line 27 * --- | 1-11 | H04L27/227 H04L25/06 |
| A | US 6 249 180 B1 (MAALEJ KHALED ET AL) 19 June 2001 (2001-06-19) * column 9, line 26 - line 41 * --- | 1-11 | |
| A | US 5 799 047 A (DOBRICA VASIC) 25 August 1998 (1998-08-25) * column 3, line 34 - line 41 * ----- | 5,6,10 | |

TECHNICAL FIELDS SEARCHED (Int.Cl.7)

H04L

The present search report has been drawn up for all claims

| Place of search | Date of completion of the search | Examiner |
|---|---|---|
| THE HAGUE | 23 May 2002 | Orozco Roura, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................
& : member of the same patent family, corresponding document

EPO FORM 1503 03.82 (P04C01)

8

## ANNEX TO THE EUROPEAN SEARCH REPORT
## ON EUROPEAN PATENT APPLICATION NO.

EP 01 44 0383

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2002

| Patent document cited in search report | | Publication date | Patent family member(s) | | Publication date |
|---|---|---|---|---|---|
| FR 2721778 | A | 29-12-1995 | FR | 2721778 A1 | 29-12-1995 |
| | | | EP | 0767996 A1 | 16-04-1997 |
| | | | WO | 9600472 A1 | 04-01-1996 |
| US 6249180 | B1 | 19-06-2001 | US | 6160443 A | 12-12-2000 |
| | | | AU | 3705901 A | 30-10-2001 |
| | | | EP | 1201066 A1 | 02-05-2002 |
| | | | NO | 20015702 A | 22-11-2001 |
| | | | WO | 0180511 A1 | 25-10-2001 |
| | | | WO | 0119048 A1 | 15-03-2001 |
| | | | US | 6249179 B1 | 19-06-2001 |
| | | | US | 6268767 B1 | 31-07-2001 |
| US 5799047 | A | 25-08-1998 | JP | 3024524 B2 | 21-03-2000 |
| | | | JP | 9093301 A | 04-04-1997 |

EPO FORM P0459

For more details about this annex : see Official Journal of the European Patent Office, No. 12/82